# EUROPEAN PATENT APPLICATION

(11) **EP 4 484 335 A1**
(43) Date of publication of application: **01.01.2025**
(21) Application number: 22937795.7
(22) Date of filing: 20.04.2022
(51) Int. Cl.: B65G 1/04

(54) **WAREHOUSING RACK, ROBOT CONTROL METHOD, MANAGEMENT TERMINAL, AND WAREHOUSING SYSTEM**

(71) Applicant: Hai Robotics Co., Ltd., Shenzhen, Guangdong 518000 (CN)
(72) Inventor: LIN, Han, Shenzhen, Guangdong 518000 (CN); XU, Shengdong, Shenzhen, Guangdong 518000 (CN)
(74) Representative: Gulde & Partner
(86) International application number: PCT/CN2022/087853
(87) International publication number: WO 2023/201557

(57) **Abstract**

Embodiments of this application relate to a warehousing shelving unit, a robot control method, a management terminal, and a warehousing system. The warehousing shelving unit has at least one storage layer and at least one temporary storage layer. The storage layer has at least one storage location for storage of goods, and the temporary storage layer has at least one temporary storage location for temporary storage of goods. The temporary storage location is defined by a first support member and a second support member, and a moving area for a first robot to walk is arranged below the temporary storage location. The first support member and the second support member each include a first end and a second end opposite to each other. A first opening is formed between the first end of the first support member and the first end of the second support member, and a second opening is formed between the second end of the first support member and the second end of the second support member. The first robot can travel to the moving area through the first opening or the second opening to place or take goods. Without affecting temporary storage of goods, the first robot can place goods, take out goods, and walk more freely, thereby improving transport efficiency.

## Description

### TECHNICAL FIELD

This application relates to the field of warehousing technologies, for example, to a warehousing shelving unit, a method for controlling a robot, a management terminal, and a warehousing system.

### BACKGROUND OF THE INVENTION

Currently, a robot having strong climbing ability and a robot having strong moving ability are configured to operate together to store and retrieve goods in a warehousing system. The robot having high climbing ability is configured for up and down position shift, and the robot having strong moving ability is configured for horizontal position shift of goods. However, in the warehousing system, the warehousing shelving unit design is unreasonable, which is not conducive to the robot having strong moving ability to store and take goods, and transport efficiency is low.

### SUMMARY OF THE INVENTION

An embodiment of this application provides a warehousing shelving unit, a robot control method, a management terminal, and a warehousing system, which can improve transport efficiency of a robot.

In order to resolve the technical problems, a technical solution adopted in the embodiments of this application is as follows. A warehousing shelving unit is provided. The warehousing shelving unit has at least one storage layer and at least one temporary storage layer. The storage layer has at least one storage location for storage of goods, and the temporary storage layer has at least one temporary storage location for temporary storage of goods. The temporary storage location is defined by a first support member and a second support member. A moving area for a first robot to walk is arranged below the temporary storage location. The first support member and the second support member each include a first end and a second end opposite to each other. A first opening is formed between the first end of the first support member and the first end of the second support member, and a second opening is formed between the second end of the first support member and the second end of the second support member.

An embodiment of this application further provides a robot control method, applicable to a warehousing system, where the warehousing system includes at least one warehousing shelving unit as described above. The method includes:
determining a target temporary storage location;
controlling a first robot to take out goods from the target temporary storage location and then move away from the target temporary storage location through a first opening or a second opening when the first robot currently performs a task of taking goods; or
controlling the first robot to reach the target temporary storage location through the first opening or the second opening to perform a task of placing goods when the first robot currently performs the task of placing goods.

An embodiment of this application further provides a management terminal, including:
a processor and a memory communicatively connected to the processor;
the memory stores computer program instructions, and the computer program instructions, when invoked by the processor, cause the processor to perform the robot control method as described above.

An embodiment of this application further provides a warehousing system, including a plurality of warehousing shelving units as described above.

In the embodiments of this application, at least one temporary storage layer is arranged on the warehousing shelving unit. The temporary storage layer has at least one temporary storage location. The temporary storage location is defined by the first support member and the second support member. A moving area for the first robot to walk is arranged below the temporary storage location. A first opening is formed between a first end of the first support member and a first end of the second support member, and a second opening is formed between a second end of the first support member and a second end of the second support member. The first robot can reach the moving area through the first opening or the second opening, or move away from the moving area through the first opening or the second opening to place or take goods. Without affecting temporary storage of goods, the first robot can place goods, take out goods, and walk more freely, thereby improving transport efficiency.

### BRIEF DESCRIPTION OF DRAWINGS

One or more embodiments are exemplarily described with reference to the corresponding figures in the accompanying drawings, and the descriptions are not to be construed as limiting the embodiments. Elements in the accompanying drawings that have same reference numerals are represented as similar elements, and unless otherwise particularly stated, the figures in the accompanying drawings are not drawn to scale.
FIG. 1a is a schematic diagram of distribution of a warehousing system according to an embodiment of this application.
FIG. 1b is a schematic composition diagram of a warehousing system according to an embodiment of this application.
FIG. 1c is a schematic composition diagram of a warehousing system according to an embodiment of this application.
FIG. 2 is a schematic structural diagram of a first robot in a warehousing system according to an embodiment of this application.
FIG. 3 is a schematic structural diagram of a second robot in a warehousing system according to an embodiment of this application.
FIG. 4 and FIG. 5 are schematic structural diagrams of a warehousing shelving unit according to an embodiment of this application.
FIG. 6 to FIG. 8 are schematic diagrams of a temporary storage location and a first channel of a warehousing shelving unit according to an embodiment of this application.
FIG. 9 to FIG. 15 are schematic structural diagrams of a warehousing shelving unit according to an embodiment of this application.
FIG. 15 to FIG. 20 are schematic structural diagrams of a first support member and a second support member in a warehousing shelving unit according to an embodiment of this application.
FIG. 21 is a schematic structural diagram of a warehousing shelving unit according to an embodiment of this application.
FIG. 22 is a schematic diagram of a first channel and a third channel in a warehousing shelving unit according to an embodiment of this application.
FIG. 23 is a schematic structural diagram of a first channel, a first support member, and a second support member in a warehousing shelving unit according to an embodiment of this application.
FIG. 24 to FIG. 26 are schematic diagrams of a driving route of a first robot in a warehousing system according to an embodiment of this application.
FIG. 27 is a schematic diagram of a hardware structure of a management terminal in a warehousing system according to an embodiment of this application.
FIG. 28 is a flowchart of a robot control method according to an embodiment of this application.
FIG. 29a to FIG. 32 are schematic diagrams of a driving route of a first robot in a warehousing system according to an embodiment of this application.

### DETAILED DESCRIPTION

For ease of understanding this application, this application is described in further detail below with reference to the accompanying drawings and specific embodiments. It should be noted that when an element is expressed as "being fixed to "another element, the element may be directly on the another element, or one or more intermediate elements may exist between the element and the another element. When one element is expressed as "being connected to" another element, the element may be directly connected to the another element, or one or more intermediate elements may exist between the element and the another element. In the description of this specification, orientation or position relationships indicated by the terms such as "up", "down", "inside", "outside" and "bottom" are based on orientation or position relationships shown in the accompanying drawings, and are used only for ease and brevity of illustration and description of this application, rather than indicating or implying that the mentioned apparatus or element must have a particular orientation or must be constructed and operated in a particular orientation. Therefore, such terms should not be construed as limiting of this application. In addition, terms "first", "second" and "third" are only used to describe the objective and cannot be understood as indicating or implying relative importance.

Unless otherwise defined, all technical and scientific terms used herein have the same meaning as commonly understood by one of ordinary skill in the art to which this application belongs. The terms used in the specification of this application are merely used for describing specific embodiments, and are not intended to limit this application. A term "and/or" used in this specification includes any or all combinations of one or more related listed items.

In addition, technical features involved in embodiments of this application that are described below may be combined with each other provided that no conflict occurs.

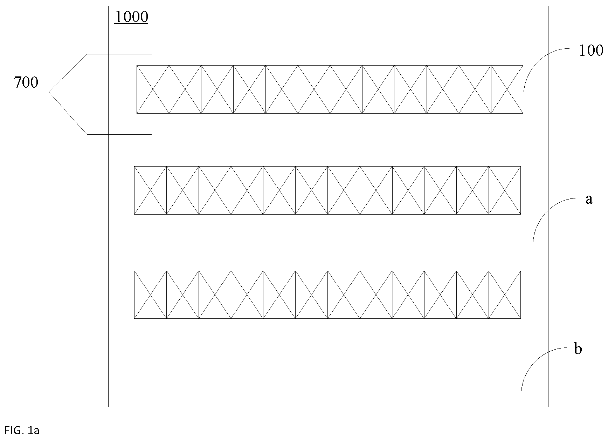

FIG. 1a shows a warehousing system 1000. The warehousing system 1000 spatially includes a storage area a and a public area b. The storage area a is configured to store goods, and the public area b is an area other than the storage area, which is configured as a transition area to the entrance and/or exit, and to place another device (such as a robot and a control device), and the like.

A plurality of warehousing shelving units 100 are arranged on the storage area a. A channel for a robot to walk is formed between adjacent warehousing shelving units 100, and between the warehousing shelving unit 100 and the public area b. The robot can store and take goods through the channel, the channel is communicated with the public area b, and the robot can also reach the public area b through the channel.

The warehousing system 1000 may further include the robot. The robot can walk in a channel and the public area b, automatically store and take out goods, and assist goods in storage and retrieval.

In some applications, in order to store more goods, the warehousing shelving unit 100 are typically provided in a structure having a multi-layer shelving unit. Each shelving unit is configured to store goods, and the robot is required to move the goods between the shelving units when storing and taking the goods. Therefore, the robot is required to have the ability to climb and move.

A robot having excellent climbing ability and moving ability has a higher cost. In some applications, in order to improve transport efficiency without increasing the cost, a robot having climbing ability and a robot having moving ability are configured to work together to store and take the goods. The robot having high climbing ability is configured for up and down position transporting, and the robot having strong moving ability is configured for horizontal position transporting of goods.

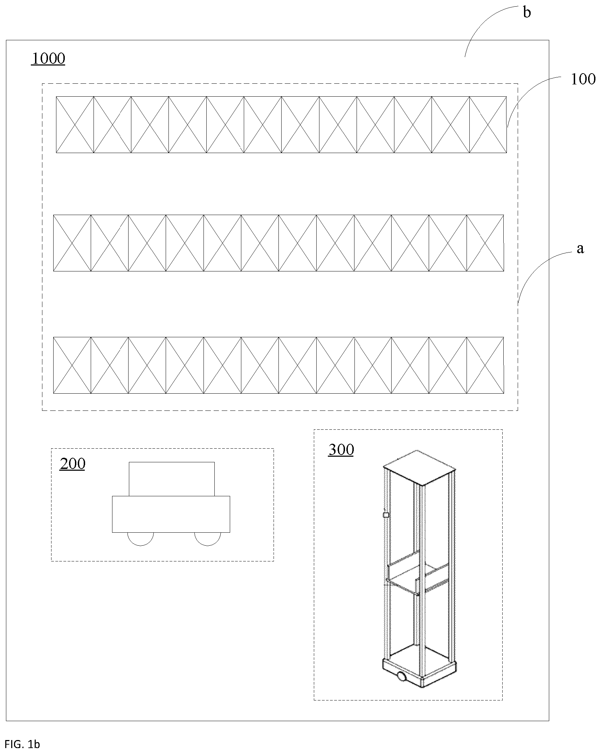

The warehousing system 1000 shown in FIG. 1b further includes a first robot 200 and a second robot 300. The first robot 200 is a robot having moving ability, and is configured for horizontal position transporting of goods. The second robot 300 is a robot having climbing ability, and is configured for up and down position transporting.

It should be noted that embodiments of this application do not limit the abilities of each robot. In this embodiment, the description of the abilities of the robot is only used for illustrating the main purpose of the robot in the warehousing system. Certainly, the first robot 200 may also climb, and the second robot 300 may also move.

The warehousing shelving unit 100 includes at least one storage layer and at least one temporary storage layer. The storage layer is configured to store goods, and the temporary storage layer is configured to temporary store goods. That is to say, the storage layer is a final storage area of the goods, and the temporary storage layer is configured as an intermediate transition area between the storage area and the target location, or an initial location and a target storage area.

The first robot 200 is configured to place the goods to or take the goods from the temporary storage layer, and the second robot 300 is configured to transport the goods between the temporary storage layer and the storage layer. The first robot 200 and the second robot 300 cooperate with each other to transport the goods. For example, when the goods need to be shipped out, the goods may be transported from the storage layer to the temporary storage layer by the second robot 300, and then the goods in the temporary storage layer may be transported away by the first robot 200. When the goods need to be stored, the first robot 200 transports the goods to the temporary storage layer, and then the second robot 300 transports the goods from the temporary storage layer to the storage layer.

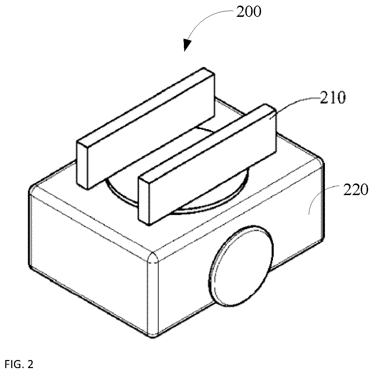

The first robot 200 may use any suitable robot having moving ability, such as an automated guided vehicle (AGV) having a lifting mechanism 210 shown in FIG. 2. The lifting mechanism 210 may be provided on a first robot body 220. The lifting mechanism 210 is configured to lift goods, and the lifting mechanism 210 may have a lifting ability. In some embodiments, the lifting mechanism 210 may be hidden or exposed to the first robot body 220, and may be configured to lift goods when the lifting structure 210 is exposed to the body 220.

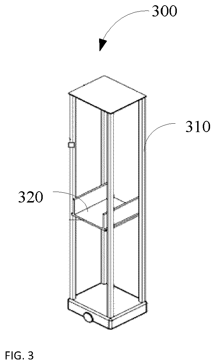

The second robot 300 may use any suitable robot having climbing ability, such as the AGV shown in FIG. 3 including the lifting mechanism 310 and a storage/retrieval mechanism 320. When the goods are transported from the temporary storage layer to the storage layer, the storage/retrieval mechanism 320 can be raised by the lifting mechanism 310, and then the goods can be placed on the storage layer by the storage/retrieval mechanism 320. When the goods are transported from the storage layer to the temporary storage layer, the storage/retrieval mechanism 320 can be lowered by the lifting mechanism 310, and then the goods can be placed on the temporary storage layer by the storage/retrieval mechanism 320.

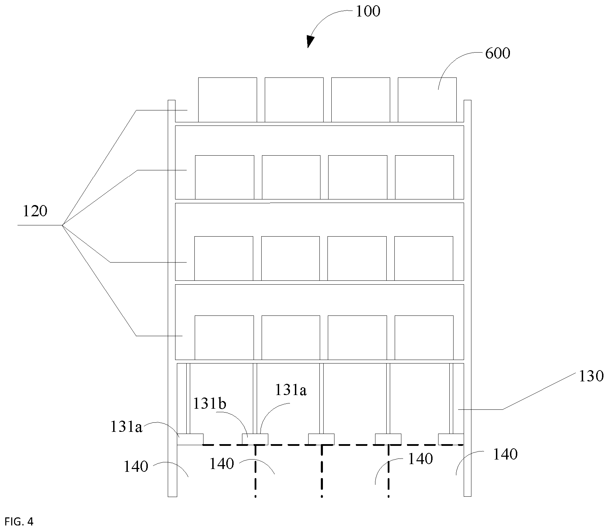

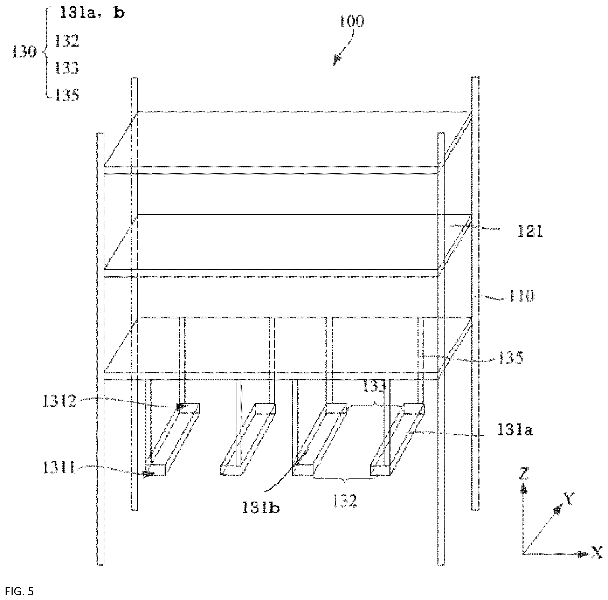

Referring to FIG. 4 and FIG. 5, the warehousing shelving unit 100 includes at least one storage layer 120 (four storage layers are used as an example in FIG. 4) and at least one temporary storage layer 130 (one temporary storage layer is used as an example in FIG. 4). The storage layer 120 has at least one storage location for storage of goods. The temporary storage layer 130 has at least one temporary storage location for temporary storage of goods. The temporary storage layer may be arranged above the storage layer, or may be arranged below the storage layer, or may also be arranged between the storage layers. In the embodiment shown in FIG. 4 and FIG. 5, the temporary storage layer 130 is arranged under each storage layer, that is, at a bottom of the warehousing shelving unit 100.

In some embodiments, referring to FIG. 4 and FIG. 5, the warehousing shelving unit 100 includes a support frame 110 and a support structure 121. The support frame 110 is configured as a support component for supporting the support structure 121 arranged thereon. The support frame 110 may include a plurality of vertically arranged posts, and the plurality of posts are arranged at intervals along a preset annular trajectory. In this embodiment, the plurality of posts may be defined in a rectangular frame or a circular frame, which is not limited in this embodiment.

In addition, the number of the post may be three, four, or another. For example, four posts are arranged. Four posts define a rectangular frame, and each post is located at four apex corners of the rectangle. The support frame 110 may also include a reinforcing beam that may connect the plurality of posts to increase stability of the support frame 110.

A plurality of support structures 121 are spaced on the support frame 110 in a height direction of the support frame 110. That is to say, a plurality of support structures 121 are arranged on the posts at intervals in an extending direction of the posts, where the height direction of the support frame 110 is direction Z in FIG. 5.

The support structure 121 is configured to carry goods 600, an upper area of the support structure 121 forms the storage layer, and the storage location is located on the support structure 121. A volume of each storage layer may be the same or different, and a size of the storage location may be the same or different to accommodate different sizes of the goods 600.

Locations on the storage layer may be divided evenly or unevenly, and physical partition (such as a baffle or a goods basket) may be arranged to define individual storage locations. The locations may not be divided, the storage layer is configured as a connected space, and the goods can be arbitrarily placed in the storage layer, and the storage location is defined by the volume of the goods.

The support structure 121 may be in a plurality of forms, for example, the support structure 121 may include a support plate whose edges may be fixedly connected to the support frame 110. For another example, the support structure 121 may also include a support bracket and a support plate connected to the support bracket, where the support bracket may be fixedly connected to the support frame 110. For another example, the support structure may also include a beam and a plurality of plates connected to the beam, where both ends of the beam may be respectively connected to the support frame 110. Through the arrangement of the support bracket and the beam, strength of the connection between the support structure 121 and the support frame 110 can be strengthened, and structural strength of the warehousing shelving unit 100 can be improved.

In some embodiments, referring to FIG. 4 and FIG. 5, the warehousing shelving unit 100 further includes a first support member 131a and a second support member 131b. The first support member 131a and the second support member 131b define the temporary storage location. That is to say, the temporary storage location is an accommodating space including the first support member 131a and the second support member 131b. A moving area 140 for the first robot to walk is arranged below the temporary storage location.

The first support member 131a and the second support member 131b are spaced in a longitudinal direction of the support frame 110. In the width direction of the support frame 110, each of the first support member 131a and the second support member 131b include a first end 1311 and a second end 1312 opposite to each other. A first opening 132 is formed between a first end of the first support member 131a and a first end of the second support member 131b, and a second opening 133 is formed between a second end of the first support member 131a and a second end of the second support member 131b.

In this embodiment, a length direction of the support frame 110 may be X direction in FIG. 5, and a width direction of the support may be Y direction in FIG. 5.

The embodiments shown in FIG. 4 and FIG. 5 are used as examples. When the first robot performs a task of taking goods, the first robot can travel from the first opening or the second opening to the moving area 140, raise the lifting mechanism to lift the goods, and then the first robot can choose to move away from the temporary storage location from the first opening or the second opening.

When the robot performs a task of placing goods, the first robot can choose to reach the temporary storage location from the first opening, or reach the temporary storage location from the second opening, and then lower the lifting mechanism so that the goods remain on the first support member and the second support member, and then can move away from the temporary storage location from the first opening or the second opening.

Reaching the temporary storage location means that the first robot approaches the temporary storage location to the extent that the first robot can take and place goods, such as reaching a moving area below the temporary storage location.

In the embodiment of this application, the first support member and the second support member define the temporary storage location, and the moving area for the first robot to walk is arranged below the temporary storage location, and both ends of the first support member and the second support member respectively form the first opening and the second opening. The first robot can reach the moving area through the first opening or the second opening, or move away from the moving area through the first opening or the second opening to place or take goods. That is, the first robot can place or take goods through the first opening or the second opening. Without affecting temporary storage of goods, the first robot can place goods, take out goods, and walk more freely, thereby improving transport efficiency.

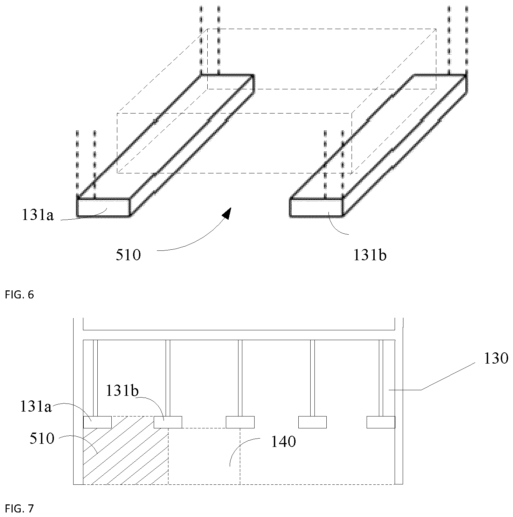

Referring to FIG. 6, the first support member 131a and the second support member 131b are arranged at intervals. That is to say, a gap is defined between the first support member 131a and the second support member 131b. In this way, a first channel 510 for the first robot to pass through is formed between the first support member 131a and the second support member 131b.

Referring to FIG. 7, in some embodiments, the first channel 510 may include an area between the first support member 131a and the second support member 131b, and a moving area 140.

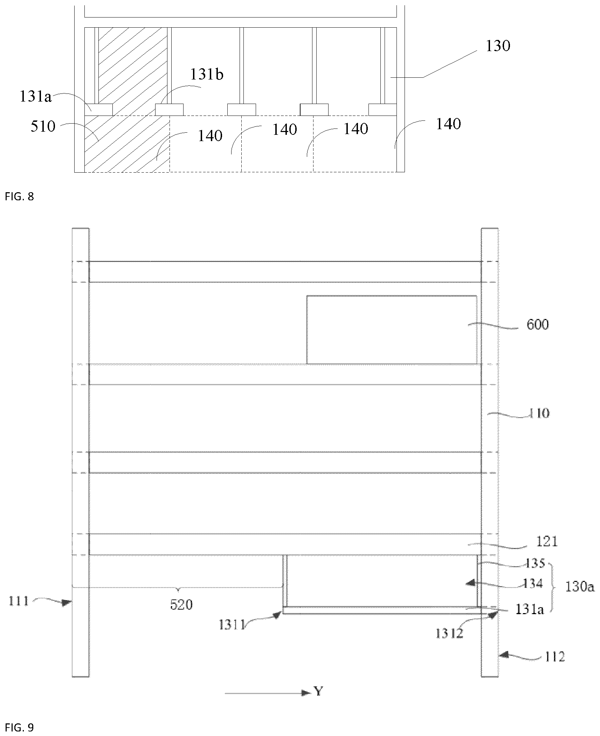

In some other embodiments, referring to FIG. 8, the first channel 510 includes an area between the first support member 131a and the second support member 131b, a moving area 140, and an area above the first support member 131a and the second support member 131b (that is, an area where the temporary storage location is located).

As can be seen from FIG. 7 and FIG. 8, the first channel 510 and the moving area 140 at least partially overlap. The first channel 510 shown in FIG. 7 may be configured for the first robot to walk when unloaded with goods, and the first channel 510 shown in FIG. 8 may be configured for the first robot to walk when loaded or unloaded with goods.

A spacing distance between the first support member and the second support member may be greater than the first robot body, so that the first robot can freely travel between the first support member and the second support member.

In some other embodiments, a spacing distance between the first support member and the second support member may also be less than the first robot body, but greater than the lifting mechanism of the first robot. A height of the first robot body may be less than a height of the first support member and the second support member from the ground. In this way, the first robot body can freely travel in the moving area, and the lifting mechanism can travel in the area between the first support member and the second support member, so as to realize the free travel of the first robot in the first channel.

The first channel is formed between the first support member and the second support member. The first support member and the second support member can be configured as the temporary storage location to temporarily store goods, and the first channel 510 between the first support member and the second support member can be configured for the first robot 200 to pass through. The first channel 510 is arranged at the corresponding location of the temporary storage location, which does not affect the placement of the temporarily stored goods, and facilitates the first robot to walk more freely.

When the first support member 131a and the second support member 131b defined by the temporary storage location is not placed with goods, regardless of whether the first robot 200 carries goods, the first channel may be freely traveled by the first robot 200. When the first robot 200 travels to the temporary storage location to lift the goods, the first robot can carry the goods in the first channel, and can travel in either direction of the first channel.

It should be noted that the storage layer, the temporary storage layer, the storage position, the temporary storage location, and the like are not specific structures in the warehousing shelving unit 100, but are storage spaces defined by each storage carrier (such as a storage layer board, a temporary storage layer board, a support structure, the first support member, and the second support member) in the warehousing shelving unit 100.

The first support member and the second support member may be in any structural form, such as a plate-like structure. The first support member and the second support member may be separate plate-like structures, such as the first support member 131a and the second support member 131b described in FIG. 5.

The second support member and the adjacent first support member may also be a unitary structure, for example, as shown in FIG. 4, part of the same plate structure is configured as the first support member 131a and the other part is configured as the second support member 131b.

The first support member and the second support member may be fixed to the warehousing shelving unit 100 in any suitable form. The first support member and the second support member may be connected to the support plate or the plate body, or may be connected to the frame or beam, which is not limited in this embodiment. In an embodiment, the first support member and the second support member are connected to one of the support structures and are located below the support structure. For example, referring to FIG. 4 and FIG. 5, the first support member and the second support member are connected to the support structure located at a lowest layer.

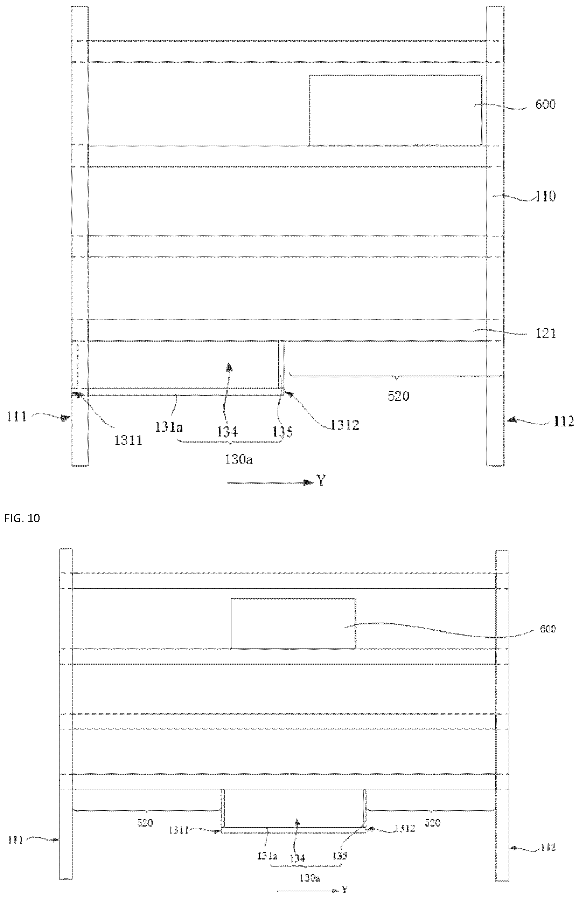

In some embodiments, as shown in FIG. 9 and FIG. 10, in a width direction of the support frame 110, the support frame 110 has a first end surface 111 and a second end surface 112 opposite to each other. The orientation shown in FIG. 9 is used as an example. The first end surface 111 may be understood as a left end surface of the support frame 110, and the second end surface 112 may be understood as a right end surface of the support frame 110.

Each of the first support members 131a and each of the second support members 131b form a support assembly 130a, a second channel 520 is defined between the support assembly 130a and the first end surface 111, and/or a second channel 520 is defined between the support assembly 130a and the second end surface 112, and the second channel 520 is configured for the first robot to walk when loaded or unloaded with goods.

In this embodiment, dimensions of the first support member 131a and the second support member 131b in a width direction of the support frame 110 are set to be less than a width of the support frame 110, and locations of the first support member 131a and the second support member 131b relative to the bracket 110 is set. Therefore, the second channel 520 is formed between the first support member 131a and the second support member 131b and the support frame 110, so as to facilitate the first robot to walk when loaded or unloaded with goods, increase a traveling area of the first robot, and then improve a traveling freedom of the first robot.

For example, as shown in FIG. 9 and FIG. 10, the width of the support structure 121 includes at least two goods widths. The first end surface 111 of the support frame 110 is aligned with one of the first end 1311 and the second end 1312 of first support member 131a and one of the first end 1311 and the second end 1312 of the second support member 131b, so that the second channel 520 is formed between the second end surface 112 of the support frame 110, and the second end 1312 of the first support member 131a and the second end 1312 of the second support member 131b, or the second channel 520 is formed between the first end surface 111 of the support frame 110, and the first end 1311 of the first support member 131a and the first end 1311 of the second support member 131b.

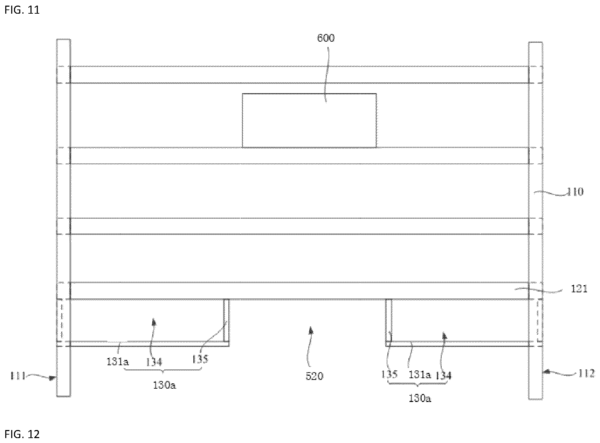

As shown in FIG. 11, when the width of the support structure 121 includes at least three goods widths, the first end 1311 and the second end 1312 of the first support member 131a, the first end 1311 and the second end 1312 of the second support member 131b are all located between the first end surface 111 and the second end surface 112 of the support frame 110, so that the second channel 520 is formed between the first ends 1311 of the first support member 131a and the second support member 131b, and the first end surface 111 of the support frame 110, and between the second ends 1312 of the first support member 131a and the second support member 131b, and the second end surface 112 of the support frame 110. In this way, the first robot can easily take and place the goods located on the support assembly 130a, and transport efficiency of the first robot is improved.

In some embodiments, one or at least two support assemblies 130a may be arranged. When a plurality of support assemblies 130a are arranged, a quantity of the temporarily stored goods on the warehousing shelving unit 100 may be increased, and further, practicality of the warehousing shelving unit 100 may be increased.

When at least two support assemblies 130a are arranged, the plurality of support assemblies 130a are spaced on the support structure 121 in the width direction of the support frame 110, so that the second channel 520 is formed between adjacent support assemblies 130a, and the second channel 520 is configured for the first robot to walk when loaded or unloaded with goods.

The orientation shown in FIG. 12 is used as an example. Two support assemblies 130a are arranged. A left end of one support assembly 130a is aligned with the first end surface 111 of the support frame 110, and a right end of the other support assembly 130a is aligned with the second end surface of the support frame 110, so that the second channel 520 is formed between the two support assemblies 130a. In this way, the first robot in the second channel 520 can perform the operation of taking goods on the goods that is placed on the support assemblies 130a located on both sides of the second channel 520, which can shorten a moving path of the first robot and improve transport efficiency of the first robot.

The arrangement of the second channel facilitates the first robot to reach the moving area below the temporary storage location from the first opening or the second opening through the second channel to place or take goods. In addition, the first robot can freely travel in the second channel, and the arrangement of the second channel increases a traveling channel of the first robot, which facilitates the free traveling of the first robot.

In some embodiments, the first ends 1311 and the second ends 1312 of the first support member 131a and the second support member 131b are both connected to the support structure 121 located above the support members through a connecting member 135. An accommodating space 134 is defined by the first support member 131a, the second support member 131b, and the connecting member 135. The accommodating space 134 is configured to accommodate goods.

The first support member 131a and the second support member 131b are both connected to the support structure 121 above through two connecting members 135, which can improve the connection strength between the first support member 131a, the second support member 131b, and the support structure 121 located above. Further, the gravity that the support assembly 130a can withstand is increased, the goods located on the first support member 131a and the second support member 131b are prevented from falling, and the safety of the warehousing shelving unit is improved.

In some embodiments, an end of the connecting member 135 faces away from the first support member 131a and the second support member 131b is fixedly connected to a surface of the support structure 121 facing the first support member 131a and the second support member 131b. In this way, the connection locations of the two support members can be hidden in the warehousing shelving unit 100, so as to avoid scratching an operator, and improve the safety of the warehousing shelving unit 100.

In this embodiment, the end of the connecting member 135 faces away from the first support member 131a and the second support member 131b may be welded to the support structure 121 located above the connecting member, or the connecting member 135 can be locked to the support structure 121 above the connecting member through a hole. For example, an external thread can be formed on the end of the connecting member 135 facing away from the first support member 131a and the second support member 131b, and a threaded hole having the internal threads can be formed on the support structure 121 connected thereto. The connection between the connecting member 135 and the support structure 121 located above the connecting member is realized through a threaded connection.

In addition, the end of the connecting member 135 facing away from the support structure 121 is fixedly connected to upper surfaces of the first support member 131a and the second support member 131b, so as to hoist the first support member 131a and the second support member 131b on the support structure 121. In this way, a lower surface of the connecting member 135 can be prevented from extending below the first support member 131a and the second support member 131b, so as to provide sufficient space for the traveling of the first robot and improve the traveling freedom of the first robot.

It should be noted that in this embodiment, the connection manner between the first support member 131a, the second support member 131b, and the support structure 121 located above may also have another option. For example, when the connecting member 135 is a connecting plate having a width, an end of the connecting member 135 may be arranged at a middle position on the sides of the first support member 131a and the second support member 131b, so that the connection between the support structure 121 and the first support member 131a, and the connection between the support structure 121 and the second support member 131b can also be realized. For another example, three, four, or even more connecting members 135 may be arranged, so that the stability between the first support member 131a, the second support member 131b and the support structure 121 can be increased.

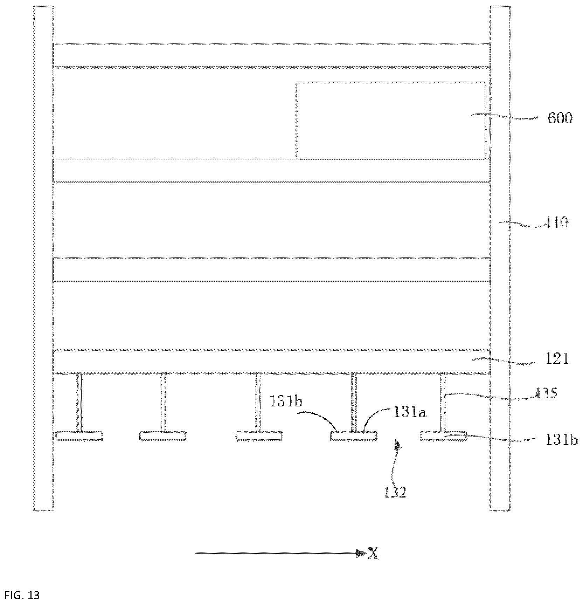

In some embodiments, as shown in FIG. 13, when the first support member 131a and the second support member 131b are separate structures, the connecting member 135 may be arranged at the middle position of the first support member 131a and the second support member 131b in a longitudinal direction of the support frame 110. When the second support member 131b and the adjacent first support member 131a are integral structures, the connecting member 135 may be arranged at a location between the second support member 131b and the adjacent first support member. In this way, interference between the connecting member 135 and the goods arranged in the accommodating space 134 can be avoided, and the goods 600 can be conveniently placed in the accommodating space 134.

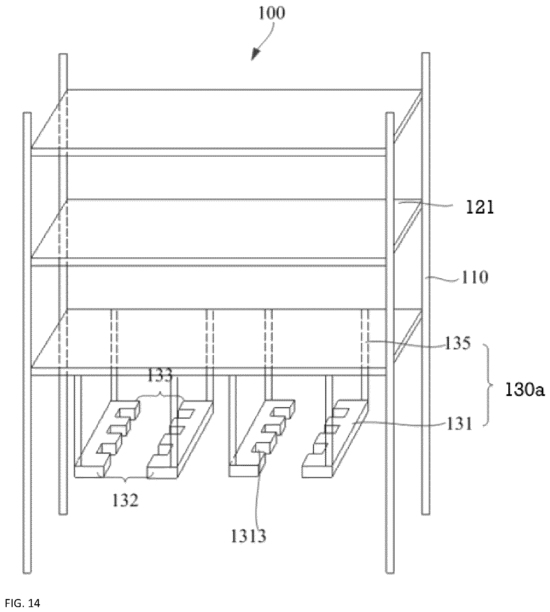

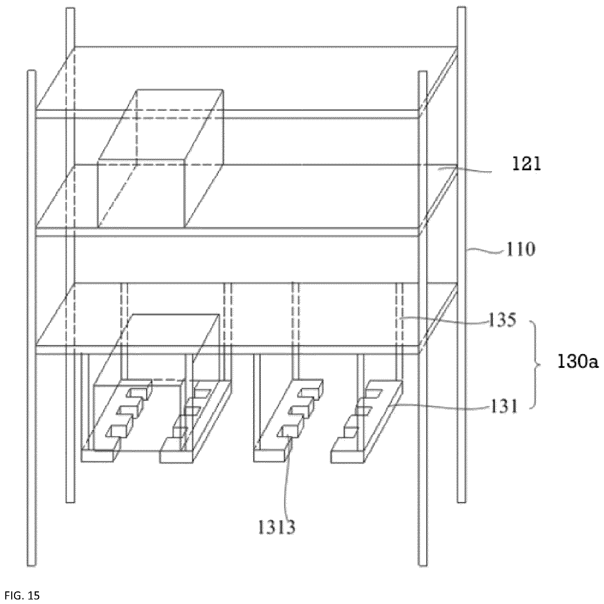

In some embodiments, as shown in FIG. 14 to FIG. 20, in a width direction of the support frame 110, the first support member 131a and the second support member 131b each have a first side surface 136 and a second side surface 137 opposite to each other, and at least one of the first side surface 136 and the second side surface 137 is provided with a groove 1313.

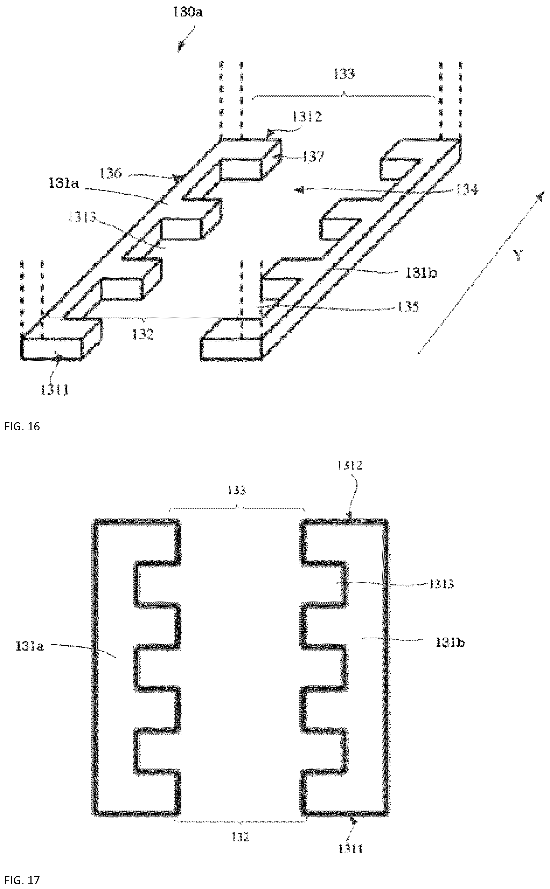

The orientation shown in FIG. 16 is used as an example. The first side surface 136 may be a left-side surface of the first support member 131a, and the second side surface 137 may be a right-side surface of the first support member 131a.

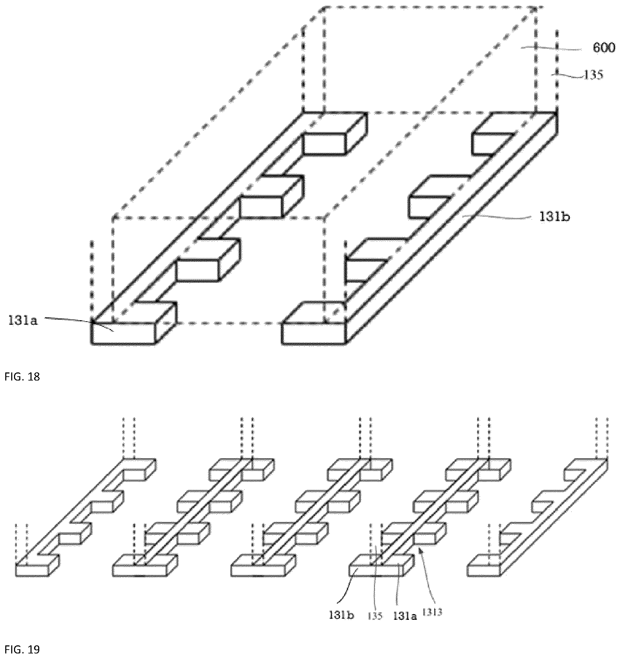

At least one of the first side surface 136 and the second side surface 137 is provided with the groove 1313. It may be understood that the groove 1313 is arranged on the first side surface 136 or the groove 1313 is arranged on the second side surface 137, and the structures thereof are shown in FIG. 17 and FIG. 18. Alternatively, both the first side surface 136 and the second side surface 137 have the groove 1313, so that the first support member 131a or the second support member 131b presents a serrated shape, and the structure is shown in FIG. 19. In this way, on a premise of ensuring the bearing capacity of the first support member 131a and the second support member 131b, the weight of the first support member 131a and the second support member 131b can be made lighter, so as to achieve the purpose of saving a material and reducing a cost. In addition, a center of gravity of the first support member 131a and the second support member 131b may be made closer to the connecting member 135, thereby improving the safety of the warehousing shelving unit 100.

As shown in FIG. 19, the adjacent second support member 131b and the first support member 131a are integrally prepared in a serrated shape. In this way, the goods 600 can be placed in the space formed between the first support member 131a and the second support member 131b, which increases the quantity of goods that can be carried by the support assembly 130a. Further, a plurality of first robots can be configured to handle goods at the same time, which improves the delivery efficiency of the warehousing system.

In some embodiments, a plurality of grooves 1313 are provided, and the plurality of grooves 1313 are spaced apart on the first support member 131a and the second support member 131b. In this way, a weight reduction process can be performed on the first support member 131a and the second support member 131b to a greatest extent, thereby reducing a pulling force on the support structure 121 located above the first support member 131a and the second support member 131b.

A shape of the groove 1313 may be a regular shape, for example, a U-shaped groove, or an irregular shape. In addition, a quantity of grooves 1313 may be freely designed according to the weight and the shape of the goods.

In some embodiments, if a ratio of the depth of the groove 1313 to a width of the first support member 131a or the second support member 131b is less than 1/3, the depth of the groove 1313 may be excessively small, and the weight of the first support member 131a or the second support member 131b cannot be reduced. If so and the ratio of the width of the groove 1313 to the first support member 131a or the second support member 131b is greater than 1/2, the depth of the groove 1313 may be excessively large, and the structural strength of the first support member 131a or the second support member 131b may be reduced.

Therefore, in this embodiment, the depth of the groove 1313 is 1/3 to 1/2 of the width of the first support member 131a or the second support member 131b. In this way, the weight reduction process is performed on the first support member 131a or the second support member 131b, and the structural strength of the first support member 131a or the second support member 131b can be ensured.

In addition, in a width direction of the support frame 110, the width of the groove 1313 can be freely adjusted based on the total amount and the shape of the goods.

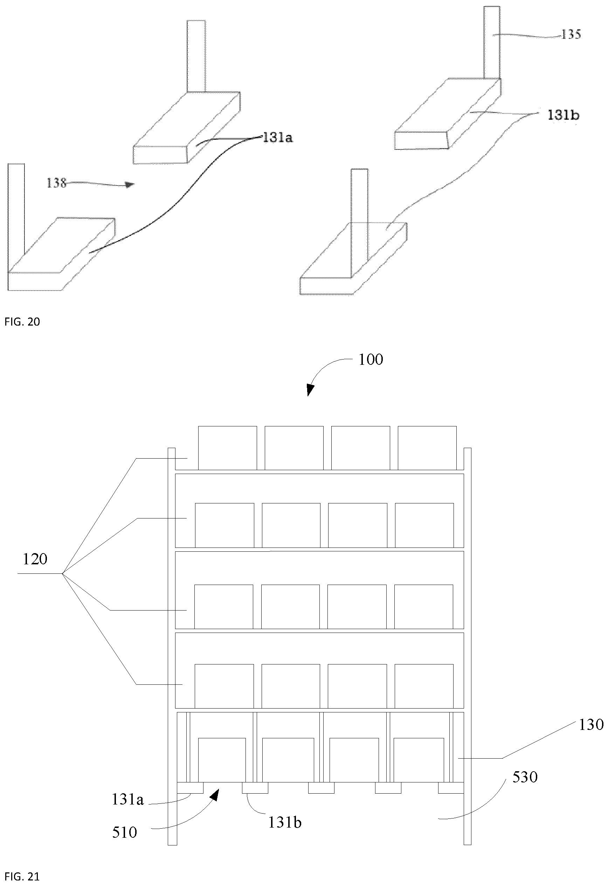

In some embodiments, as shown in FIG. 20, the first support member 131a and the second support member 131b each include two spaced support blocks. Each of the support blocks is connected to the support structure 121 located above the support block through a connecting member 135, and a third opening 138 is formed between adjacent support blocks. In this way, the weight of the support member can be reduced, the tensile force on the support structure 121 connected thereto can be reduced, and the stability of the warehousing shelving unit can be improved.

It should be noted that the support block and the connecting member 135 may be a split structure or integrally formed. For example, bottoms of the two connecting members 135 are bent in opposite directions to form a bent portion, and the bent portion forms the support block, which can improve the stability between the connecting member 135 and the support block.

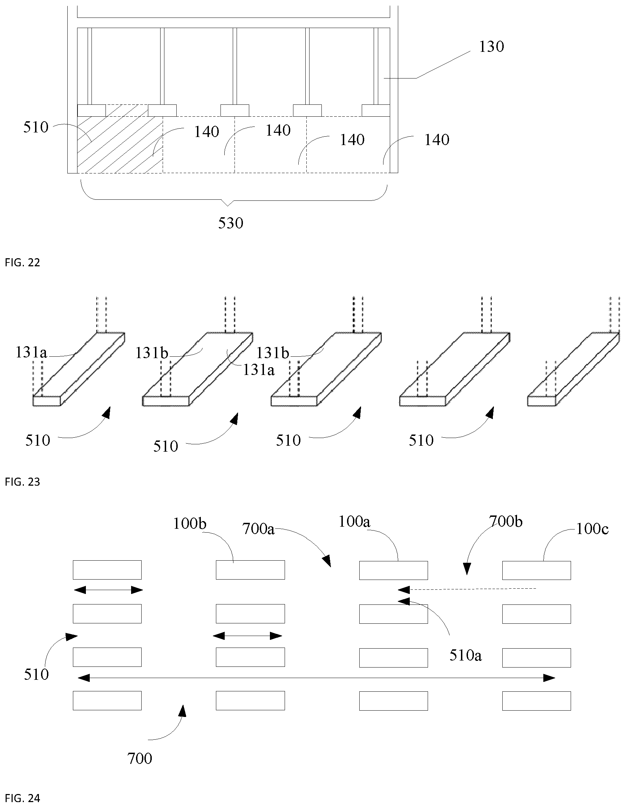

In some embodiments, referring to FIG. 21, a third channel 530 is formed in communication with the moving area below each temporary storage location. That is to say, the third channel 530 is arranged below the temporary storage layer 130, and the third channel 530 is designed for the first robot to pass through when loaded with goods. Referring to FIG. 22, the third channel 530 and the moving area 140 at least partially overlap.

When the first robot is required to take goods at the target temporary storage location, the first robot can reach the moving area below the target temporary storage location through the third channel, and then lift the lifting mechanism to lift the goods. Then, the first robot can move away from the target temporary storage location through the first opening or the second opening.

The arrangement of the third channel provides a path to take goods at the temporary storage location, which facilitates the first robot to take goods. The third channel 530 provides more route choices for a traveling path of the first robot, further improving the freedom of the first robot to walk.

Since the first support member and the second support member may be arranged at intervals, a first channel can be formed between each first support member and the second support member, and a plurality of first channels are formed in the warehousing shelving unit 100. In the embodiment shown in FIG. 23, four temporary storage locations are included. A spacing between the first support member 131a and the second support member 131b defines the temporary storage location, and the spacing forms the first channel 510. Therefore, four first channels 510 are distributed in the warehousing shelving unit. The first channel is arranged at the corresponding location of each temporary storage location in the temporary storage layer, which can ensure that the temporary storage layer provides more temporary storage locations and facilitate the first robot to pass through.

In some other embodiments, the first channel may be partially formed in each temporary storage location of the temporary storage layer, and the first channel may not be partially formed. Certainly, in addition to the first channel corresponding to the temporary storage location, a channel extending through the temporary storage layer in the width direction of the warehousing shelving unit may be specially opened for the first robot to pass through.

Referring to FIG. 1a, in the warehousing system 1000, a second robot channel 700 is further arranged between each warehousing shelving unit 100, or between the warehousing shelving unit 100 and the public area b. In order to facilitate the robot to store and take the goods, the warehousing shelving units 100 are usually arranged at intervals, and a space exists on both sides of the shelving units, and the space forms the second robot channel 700.

That is to say, the second robot channel 700 is a space on both sides of the warehousing shelving unit 100, which is either an area between the warehousing shelving unit 100, or an area between the warehousing shelving unit 100 and the public area b. When the warehousing shelving unit 100 is placed close to a wall of a warehouse, the second robot channel 700 may also be an area between the warehousing shelving unit 100 and the warehouse wall (in this case, the wall may also be understood as part of the public area).

The second robot channel 700 is designed for both the first robot and the second robot to pass through. The arrangement of the second robot channel 700 facilitates the first robot to reach the temporary storage location from the first opening or the second opening through the second robot channel 700 to take or place goods. The arrangement of the second robot channel provides more route choices for a traveling path of the first robot, further improving the freedom of the first robot to walk.

The second robot channel 700 may in communication with the first channel 510, and the first robot may freely reach the first channel 510 through the second robot channel 700, or reach the second robot channel 700 through the first channel 510.

Referring to FIG. 24, the first channel 510a has two adjacent second robot channels, which are the second robot channel 700a on a first side and a second robot channel 700b on the second side. The first channel 510a may reach another area through one of the two adjacent second robot channels. The first side and the second side refer to both sides of the warehousing shelving unit 100.

When the first robot is required to reach the target temporary storage location corresponding to the first channel 510a to store or take the goods, the first robot can reach the target temporary storage location through the second robot channel 700a on the first side, or can reach the target temporary storage location through the second robot channel 700b on the second side.

When the first robot is required to go to another target location after taking the goods, or is required to go to another target location after delivering the goods, the first robot can reach the target location from the target temporary storage location through the second robot channel 700a on the first side, or can reach the target location through the second robot channel 700b on the second side.

In some embodiments the first channels of the plurality of warehousing shelving units 100 are arranged correspondingly, and the first channels corresponding to the plurality of warehousing shelving units 100 form a connected channel. That is to say, when each warehousing shelving unit 100 has a plurality of first channels, the first channels of each warehousing shelving unit may be arranged correspondingly. For example, the first channel corresponding to each shelving unit is substantially aligned in a direction, or the first channel corresponding to each shelving unit is located substantially on a straight line. Therefore, the corresponding first channels can form a connected channel. The first robot can travel in the connected first channel, and the connected channel provides a direct route for the first robot and provides more route choices for the first robot.

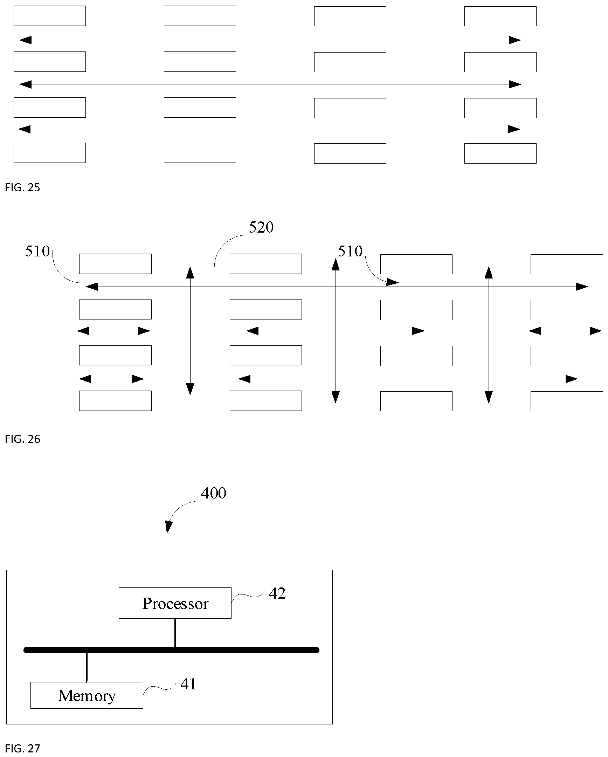

Referring to FIG. 25, in the embodiment shown in FIG. 25, four shelving units are defined. Each shelving unit has three first channels, which are respectively a first first channel, a second first channel, and a third first channel according to the top-to-bottom direction in FIG. 25. The first first channel of each shelving unit forms a connected channel, the second first channel of each shelving unit forms a connected channel, and the third first channel of each shelving unit forms a connected channel. That is to say, the first channel corresponding to each row of each shelving unit forms a connected channel.

Still referring to FIG. 24, the warehousing shelving unit 100b on the left side of the warehousing shelving unit 100a and the warehousing shelving unit 100c on the right side are adjacent shelving units for the warehousing shelving unit 100a. The second robot channel 700a and the second robot channel 700b are the second robot channel of the warehousing shelving unit 100a, and the first channel 510a is the first channel of the warehousing shelving unit 100a.

When the first robot is required to reach the target temporary storage location to store and take the goods, the first robot can reach the target temporary storage location (shown in dashed lines) through the first channel of adjacent shelving units (both left and right) and the second robot channel of the shelving unit that the target temporary storage location is located.

When the first robot is required to go to another target location after taking the goods, or is required to go to another target location after delivering the goods, the first robot can reach the target location from the target temporary storage location through the second robot channel (700a or 700b) of the current shelving unit and the first channel of the adjacent shelving unit.

FIG. 26 schematically shows a schematic diagram of a route of the first robot traveling the first channel and the second robot channel, and the locations of the arrows in the figure are all passable areas of the first robot. It can be learned that the first robot has a plurality of routes to choose from, and has a high degree of traveling freedom.

The above is only an example of forming a first robot route for the first channel 510, the second channel 520, the third channel 530, and the second robot channel 700. The first channel 510, the second channel 520, the third channel 530, and the second robot channel 700 can be freely combined to form the driving route of the first robot. In an embodiment including at least two of the first channel 510, the second channel 520, the third channel 530, and the second robot channel, the channels communicate with each other to form a connected channel network, providing the first robot with access to channels in all directions. The first robot may select an optimal traveling path from each driving route based on some setting rules (such as a shortest path rule).

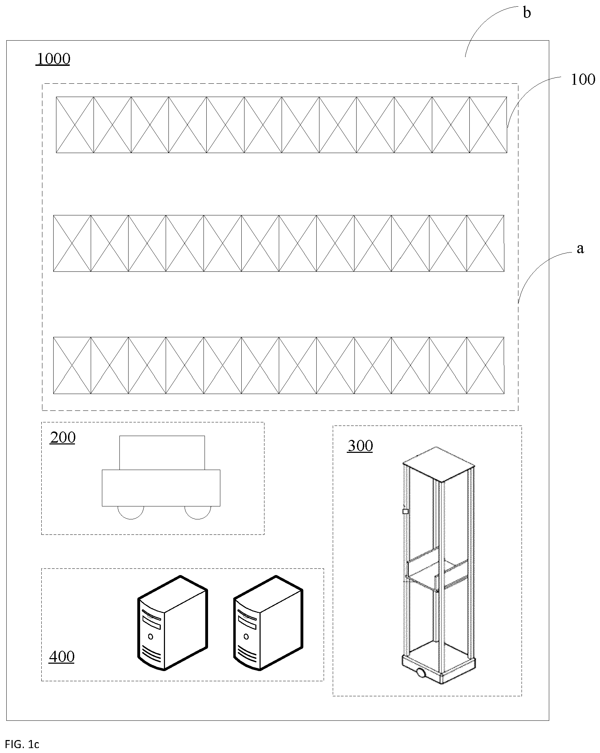

In some other embodiments, referring to FIG. 1c, the warehousing system 100 further includes a management terminal 400. FIG. 27 schematically shows a hardware structure of the management terminal 400. As shown in FIG. 27, the management terminal 400 includes a memory 41 and a processor 42.

The memory 41, as a non-volatile computer readable storage medium, may be configured to store a non-volatile software program, a non-volatile computer-executable program instruction. The memory 41 may include a program storage area and a data storage area. The program storage area may store an operating system and an application program required by at least one function. The data storage area may store data created according to use of the management terminal and the like.

In addition, the memory 41 may include a high-speed random access memory, and may further include a non-volatile memory, such as at least one magnetic disk memory device, a flash memory device, or other non-volatile solid-state memory devices. In some embodiments, the memory 41 may optionally include remotely disposed memories relative to the processor 42, and these remote memories may be connected to the management terminal by a network.

Examples of the network include, but are not limited to, the Internet, an intranet, a local area network, a mobile communication network, and a combination thereof.

The processor 42 uses a plurality of interfaces and lines to connect parts of the entire management terminal 40, and performs a plurality of functions of the management terminal by running or executing software programs stored in the memory 41 and invoking data stored in the memory 41 and processing data, for example, to achieve a robot control method according to any embodiment of this application.

one or more processors 42 may be arranged, and one processor 42 is used as an example in FIG. 27. The processor 42 may be connected to the memory 41 by a bus or in other manners. In FIG. 27, the processor and the memory being connected through a bus is used as an example.

The processor 42 may include a central processing unit (CPU), a digital signal processing (DSP), an application specific integrated circuit (ASIC), a field programmable gate array (FPGA) device, and the like. The processor 22 may further be implemented as a combination of computing devices, for example, a combination of a DSP and a microprocessor, multiple microprocessors, one or more microprocessors in conjunction with a DSP core, or any other such configuration.

A person skilled in the art may understand that the above is only an example of the structure of the warehousing system. In a practical application, more devices or areas can be added to the warehousing system according to actual functional requirements. Certainly, one or more devices or areas may be omitted according to the functional requirements.

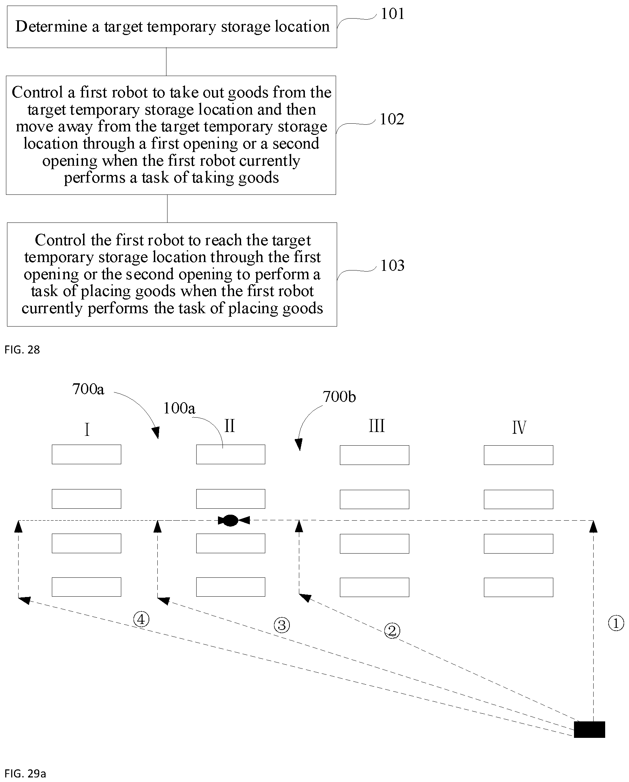

An embodiment of this application further provides a robot control method. The method is applicable to the above warehousing system, and may be performed by the management terminal 400. s shown in FIG. 28, the method includes the following operations.

101: The management terminal determines a target temporary storage location.

In a practical application, the target temporary storage location can be determined based on order information or another sorting information, and then the target temporary storage location can be determined based on the target temporary storage location. For example, any available temporary storage location in the warehousing shelving unit where the target temporary storage location is located is selected as the target temporary storage location, or an available temporary storage location closest to the first robot is selected as the target temporary storage location.

102: The management terminal controls a first robot to take out goods from the target temporary storage location and then move away from the target temporary storage location through a first opening or a second opening when the first robot currently performs a task of taking goods.

When the first robot performs the task of taking goods, the first robot reaches the target temporary storage location and takes out the goods from the target temporary storage location, and then move away from the target temporary storage location through the first opening or the second opening.

The first robot 200 shown in FIG. 2, FIG. 4, and FIG. 5 are used as examples. When the first robot 200 performs the task of taking goods, the lifting mechanism 210 of the first robot 200 is hidden in the body 220. Or when the lifting mechanism 210 is partially exposed to the body 220, but the overall height of the first robot is less than or equal to the height of the moving area, the first robot can directly reach the moving area 140, and then raise the lifting mechanism 210 to lift the goods 600. Then, the first robot 200 can move away from the target temporary storage location from the first opening, or move away from the target temporary storage location from the second opening carrying the goods 600.

When the lifting mechanism 210 of the first robot 200 is partially exposed to the body 220 and the overall height of the first robot is greater than the height of the moving area, the first robot 200 drives the lifting mechanism 210 to travel to the target temporary storage location, the lifting mechanism 210 enters from the first opening 132 side, and the body 220 travels to the moving area. The first robot then continues to raise the lifting mechanism 210 to lift the goods 600. Then, the first robot 200 can move away from the target temporary storage location from the first opening, or move away from the target temporary storage location from the second opening carrying the goods 600.

Similarly, the first robot can cause the lifting mechanism 210 to enter and travel to the moving area from the second opening 133 side. The first robot then continues to raise the lifting mechanism 210 to lift the goods 600. Then, the first robot 200 can move away from the target temporary storage location from the first opening, or move away from the target temporary storage location from the second opening carrying the goods 600.

103: The management terminal controls the first robot to reach the target temporary storage location through the first opening or the second opening to perform a task of placing goods when the first robot currently performs the task of placing goods.

When the first robot performs the task of placing goods, the first robot can carry the goods from the first opening or the second opening to the target temporary storage location, and place the goods on the target temporary storage location.

The first robot 200 shown in FIG. 2, FIG. 4, and FIG. 5 are still used as examples. When the first robot 200 performs the task of placing goods, the lifting mechanism 210 of the first robot 200 carries the goods 600, and the first robot 200 may choose to cause the lifting mechanism 210 enter from the first opening 132, and travel the body 220 to the moving area below the target temporary storage location. Then, the first robot 200 lowers the lifting mechanism 210 and places the goods 600 in the temporary storage location.

Similarly, the first robot 200 may choose to cause the lifting mechanism 210 enter from the second opening 133, and drive the body 220 to the moving area below the target temporary storage location. Then, the first robot 200 lowers the lifting mechanism 210 and places the goods 600 in the temporary storage location.

The first robot 200 may move away from the target temporary storage location through the first opening or the second opening after the task of placing goods is performed.

That is to say, if the first robot reaches the target temporary storage location through the first opening, the first robot can move away from the target temporary storage location through the first opening or the second opening after the task of placing goods is performed. If the first robot reaches the target temporary storage location through the second opening, the first robot can move away from the target temporary storage location through the first opening or the second opening after the task of placing goods is performed.

In some other embodiments, after the first robot 200 performs the task of placing goods, the lifting mechanism 210 can be hidden in the first robot body 220, or the lifting mechanism 210 may be partially exposed to the body 220, but the overall height of the first robot is less than or equal to the height of the moving area. In this case, the first robot 200 may also directly move away from the moving area 140.

In the robot control method of the embodiment of this application, the first robot can reach the target temporary storage location through the first opening or the second opening, and move away from the target temporary storage location through the first opening or the second opening to place or take goods. The driving route of the first robot is enriched, which is convenient for the first robot to place or take goods, and improves transport efficiency.

It should be noted that 101, 102, and 103 are only used for representing each step, and are not used for indicating the order between the steps.

When the warehousing shelving unit 100 includes a third channel and the first robot performs the task of taking goods, the first robot may also directly reach the moving area below the target temporary storage location from the third channel, raise the lifting mechanism to lift the goods, and move away from the target temporary storage location from the first opening or the second opening.

When the first robot performs the task of placing goods, the first robot can reach the target temporary storage location through the first opening or the second opening, lower the lifting mechanism and place the goods in the target temporary storage location, and the first robot can directly move away from the target temporary storage location from the third channel.

In some other embodiments, the method further includes:

The management terminal controls the first robot to walk based on one of the following driving routes when the first robot is in a loaded state or an unloaded state:
a: reaching the target temporary storage location though a second robot channel on a first side;
b: reaching the target temporary storage location though a second robot channel on a second side;
c: leaving the target temporary storage location, and then reaching a target location through the second robot channel on the first side; and
d: leaving the target temporary storage location, and then reaching the target location through the second robot channel on the second side.

Whether the first robot store or take goods, the first robot is required to reach the target temporary storage location to place the goods in the target temporary storage location, or move the goods away from the target temporary storage location.

In a case that the warehousing system 1000 includes a connected first channel and a second robot channel, the first robot has a plurality of routes to the target temporary storage location, which are summarized into two categories. One is to reach the target temporary storage location through the second robot channel on the first side of the shelving unit where the target temporary storage location is located, and the other is to reach the target temporary storage location through the second robot channel on the second side of the shelving unit where the target temporary storage location is located. The management terminal 400 may select a traveling path and instruct the first robot to reach the target temporary storage location based on the traveling path.

Referring to FIG. 29a, the driving route ② and the driving route ① both belong to reaching the target temporary storage location through the second robot channel 700b on a second side of a current shelving unit II (the solid black circle in the figure represents the location of the target temporary storage location). The driving route ③ and the driving route ④ both belong to reaching the target temporary storage location through the second robot channel 700a on the first side of the current shelving unit II.

Similarly, the first robot has a plurality of routes from a current target temporary storage location to the target location, which are summarized into two categories. One is to reach the target location through the second robot channel on a first side of a current shelving unit, and the other type is to reach the target location through the second robot channel on a second side of the current shelving unit. The management terminal 40 may select a traveling path and instruct the first robot to reach the target location based on the traveling path.

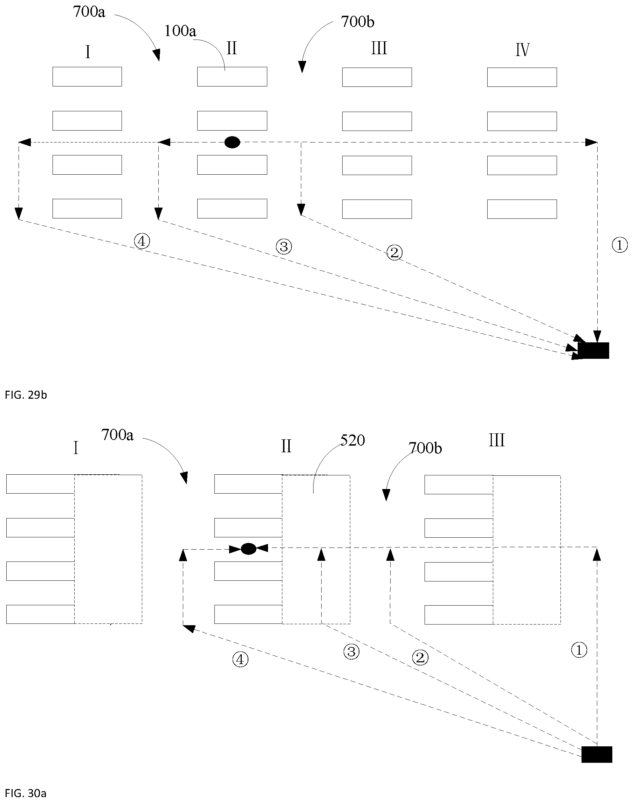

Referring to FIG. 29b, the driving route ② and the driving route ① both belong to reaching the target location through the second robot channel 700b on a second side of a current shelving unit II (the solid black rectangle in the figure represents the target location). The driving route ③ and the driving route ④ both belong to reaching the target location through the second robot channel 700a on the first side of the current shelving unit II.

In a practical application, the target location can be determined according to the order information or the another sorting information. For example, according to the order information, after the first robot takes goods at a first temporary storage location, the first robot is required to go to the second temporary storage location to take another piece of goods. In this case, the second temporary storage location may be the target location. For another example, according to the sorting information, after the first robot stores goods, the first robot is required to reach a sorting area again, and the sorting area is the target location.

Specifically, in some embodiments, the management terminal may select the traveling path of the first robot based on certain rules, which may use any suitable rule or combination of rules, such as an obstacle-free rule, a shortest route rule, and the like. For example, after the management terminal obtains each driving route, the driving route having an obstacle or a conflict with the traveling path of another robot can be first eliminated, and then the shortest route from the remaining driving routes is selected as the traveling path of the first robot.

In a practical application, when goods need to be retrieved, the management terminal 400 may first instruct the second robot to move the goods from the storage location to the target temporary storage location. After the transportation of the second robot is completed, the first robot is instructed to go to the target temporary storage location to take goods.

When the goods need to be stored, the management terminal 400 may instruct the first robot to reach the target temporary storage location based on the selected traveling path, and place the goods in the target temporary storage location. After the goods is placed, the second robot is instructed to transport the goods from the target temporary storage location to the target storage location.

In a case that the warehousing system further includes a second channel in communication with the first channel, if the first robot is in a loaded state or an unloaded state, the driving route further includes:
e: reaching the target temporary storage location through the second channel; and
f: leaving the target temporary storage location, and then reaching the target location through the second channel.

The setting of the second channel provides the first robot with another path to reach the target temporary storage location or move away from the target temporary storage location, which enriches the driving route of the first robot. When the management terminal builds the driving route of the first robot, the management terminal may choose to reach the target temporary storage location directly from the second channel, or may choose to travel another channel (such as the first channel, the second robot channel, and/or the third channel), and then reach the target temporary storage location through the second channel.

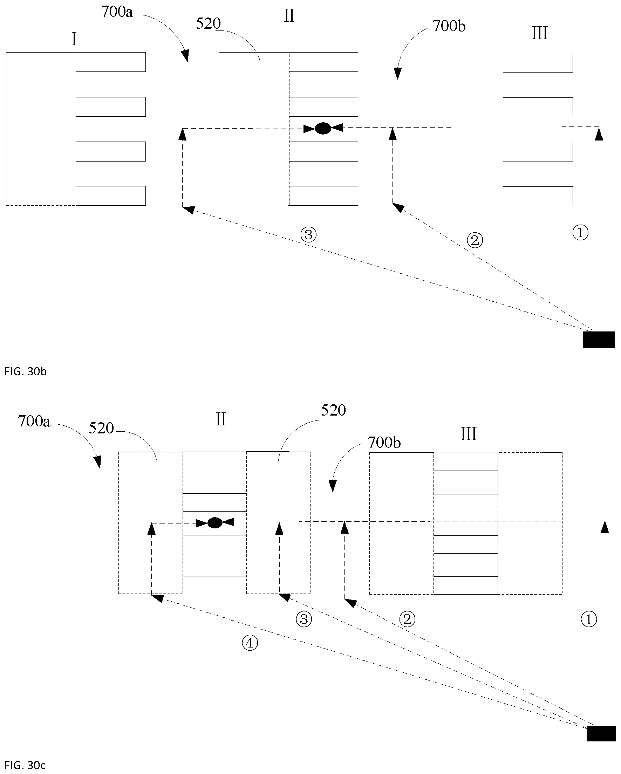

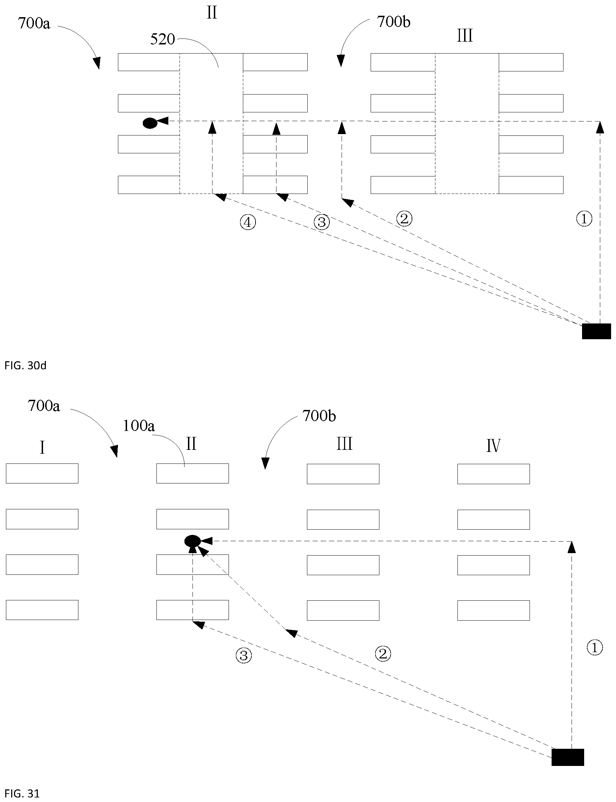

Referring to FIG. 30a to FIG. 30d, the driving routes ①, ② and ③ in FIG. 30a, the driving routes ① and ③ in FIG. 30b, the driving routes ①, ②, ③, and ④ in FIG. 30c, and the driving routes ①, ②, ③, and ④ in FIG. 30d all belong to reaching the target temporary storage location through the second channel.

A construction principle of leaving the target temporary storage location and reaching the target location through the second channel is the same as that of reaching the target temporary storage location through the second channel. Reference may be made to the above description and details are not be repeated here.

When the warehousing system 1000 includes the third channel, if the first robot is in an unloaded state, the driving route further includes:
g: reaching the target temporary storage location through the third channel; and
h: leaving the target temporary storage location, and then reaching the target location through the third channel.

Generally, the height of the third channel is less than the height of the first robot when loaded with goods, so the third channel is only for the first robot to travel when the first robot is unloaded, and the third channel can be used when the first robot is unloaded to take goods, or when the first robot is unloaded after the placing of goods.

When the management terminal builds the driving route of the first robot, the management terminal may choose to reach the target temporary storage location directly from the third channel, or may choose to travel another channel (such as the first channel, the second robot channel, and/or the third channel), and then reach the target temporary storage location through the third channel.

Referring to FIG. 31, the driving routes ② and ③ belong to the target temporary storage location through the third channel.

A construction principle of leaving the target temporary storage location and reaching the target location through the third channel is the same as that of reaching the target temporary storage location through the third channel. Reference may be made to the above description and details are not be repeated here.

When the warehousing system 1000 includes the first channel, first channels of a plurality of warehousing shelving units are arranged correspondingly, and the first channels corresponding to the plurality of warehousing shelving units form a connected channel, the driving route further includes:
i: reaching the target temporary storage location through the first channel of an adjacent warehousing shelving unit and a second robot channel of the warehousing shelving unit where the target temporary storage location is located; and
j: leaving the target temporary storage location, and then reaching the target location through the first channel of a current warehousing shelving unit, the second robot channel of the current warehousing shelving unit, and the first channel of the adjacent warehousing shelving unit.

FIG. 29a is used as an example. For the target temporary storage location located on the shelving unit II, the path of the route ① includes the first channel through the adjacent shelving unit III - the second robot channel 700b on the second side of the current shelving unit II - the target temporary storage location (part of the path is omitted).

FIG. 29b is used as an example. For the target temporary storage location located on the shelving unit II, after the first robot moves away from the target temporary storage location, the path of the driving route ① includes the first channel through the current shelving unit II - the second robot channel 700b on the second side of the current shelving unit II - the target location (part of the path is omitted).

The first channel corresponding to the plurality of warehousing shelving units forms a connected channel, and the connected channel provides another traveling path for the first robot, which enriches the driving route of the first robot.

Generally, each warehousing shelving unit is arranged in a row, and a plurality of warehousing shelving units are arranged in a row. The connected channel may be formed by connecting the first channels of all warehousing shelving units in a row, or may be formed by connecting the first channels of some warehousing shelving units in a row.

If the goods are not placed in each temporary storage location corresponding to the connected channel, the first robot can travel through the communicating channel regardless of whether the first robot is loaded or unloaded. If the connected channel is placed in a corresponding temporary storage location with goods, the connected channel can be used for the first robot to walk when unloaded with goods.

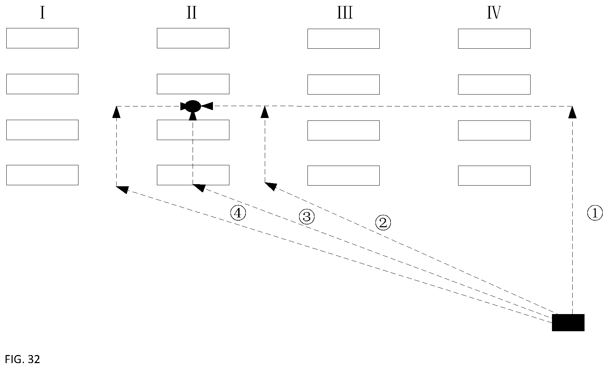

The connected channel is used in the driving route ① and ④ in FIG. 29a, the driving route ① and ④ in FIG. 29b, the driving route ① in FIG. 30a, the driving route ① in FIG. 30b, the driving route ① in FIG. 30c, the driving route ① in FIG. 30d, the driving route ① in FIG. 31 and the driving route ① in FIG. 32

FIG. 32 illustrates four routes ① to ④. The black rectangle represents the first robot, and the black circle represents the first channel corresponding to the target temporary storage location. In this embodiment, four routes can be constructed, and each represented by a dashed path.

The route to the driving route ① is: public area -- second robot channel on a second side of a shelving unit IV -- first channel of a shelving unit IV --second robot channel on a second side of a shelving unit III (also the second robot channel on the first side of the shelving unit IV)-- first channel of a shelving unit III -- second robot channel on a second side of a shelving unit II (also the second robot channel on the first side of the shelving unit III) - first channel of the shelving unit II (that is, the first channel corresponding to the target temporary storage location).

The route to the driving route ② is: public area -- second robot channel on a second side of a shelving unit II (also the second robot channel on the first side of the shelving unit III) - first channel of the shelving unit II (that is, the first channel corresponding to the target temporary storage location).

The route to the driving route ③ is: public area -- third channel of the shelving unit II - first channel of the shelving unit II (that is, the first channel corresponding to the target temporary storage location).

The route to the driving route ④ is: public area -- second robot channel on a first side of a shelving unit II (also the second robot channel on the second side of the shelving unit I) - first channel of the shelving unit II (that is, the first channel corresponding to the target temporary storage location).

The shortest route is ①, and the second shortest route is ②. If according to the principle of the shortest route + the obstacle-free route, assuming that the routes of ① and ② are free of obstacles (such as another first robot), the driving route ① can be selected as the traveling path of the first robot. Assuming that there are obstacles in the route ①, the driving route ② can be selected as the traveling path of the first robot.

It should be noted that FIG. 29a, FIG. 29b, FIG. 30a to FIG. 30d, FIG. 31, and FIG. 32 are not an exhaustive list of the driving routes but only examples. A person skilled in the art may understand that the management terminal 40 can also construct more driving routes, and select an appropriate exercise route as the traveling path of the first robot.

It should be noted that the above is only an example of using each channel for the first robot. In a practical application, a plurality of channels can be combined arbitrarily, such as a combination of the first channel and the second channel, a combination of the third channel and the second channel, a combination of the second channel and the second robot channel, a combination of the second channel, the first channel, and the second robot channel, and the like.

Finally, it should be noted that the foregoing embodiments are merely used for describing the technical solutions of this application, but are not intended to limit this application. Under the ideas of this application, the technical features in the foregoing embodiments or different embodiments may also be combined, the steps may be performed in any order, and many other changes of different aspects of this application also exists as described above, and these changes are not provided in detail for simplicity. Although this application is described in detail with reference to the foregoing embodiments, it should be appreciated by a person skilled in the art that, modifications may still be made to the technical solutions described in the foregoing embodiments, or equivalent replacements may be made to the part of the technical features; and these modifications or replacements will not cause the essence of corresponding technical solutions to depart from the scope of the technical solutions in the embodiments of this application.

## Claims

1. A warehousing shelving unit, having at least one storage layer (120) and at least one temporary storage layer (130), the storage layer (120) having at least one storage location for storage of goods, and the temporary storage layer (130) having at least one temporary storage location for temporary storage of goods; and
wherein the temporary storage location is defined by a first support member (131a) and a second support member (131b), a moving area (140) for a first robot to walk is arranged below the temporary storage location, the first support member (131a) and the second support member (131b) each comprises a first end (1311) and a second end (1312) opposite to each other, a first opening (132) is formed between the first end (1311) of the first support member (131a) and the first end of the second support member (131b), and a second opening (133) is formed between the second end (1312) of the first support member (131a) and the second end of the second support member (131b).

2. The warehousing shelving unit according to claim 1, comprising a support frame (110) and at least one support structure (121);
wherein the support structures (121) are arranged on the support frame (110) at intervals in a height direction of the support frame (110), an upper area of the support structure (121) forms the storage layer (120), and the storage location is located on the support structure (121); and
wherein the first support member (131a) and the second support member (131b) are connected to one of the support structures (121) and are located below the support structure (121).

3. The warehousing shelving unit according to claim 2, wherein the first support member (131a) and the second support member (131b) are connected to the support structure (121) located at a lowest layer.

4. The warehousing shelving unit according to any of claims 1 to 3, wherein the first support member (131a) and the second support member (131b) are spaced apart to form a first channel (510) for a first robot to pass through between the first support member (131a) and the second support member (131b), and the first channel (510) and the moving area (140) at least partially overlap.

5. The warehousing shelving unit according to any of claims 2 to 3, wherein in a width direction of the support frame (110), the support frame (110) has a first end surface (111) and a second end surface (112) opposite to each other; and
the first support member and the second support member form a support assembly (130a), a second channel (520) is defined between the support assembly (130a) and the first end surface (111), and/or a second channel (520) is defined between the support assembly (130a) and the second end surface (112), and the second channel (520) is configured for the first robot to walk.

6. The warehousing shelving unit according to any of claims 1 to 3, wherein a third channel (530) is arranged below the temporary storage layer (130), the third channel (530) is configured for the first robot to walk when being unloaded, and the third channel (530) and the moving area (140) at least partially overlap.

7. The warehousing shelving unit according to claim 2 or 3, wherein the first end (1311) and the second end (1312) of each support member are both connected to the support structure (121) located above the support member through a connecting member (135).

8. The warehousing shelving unit according to claim 7, wherein the connecting member (135) is arranged at a middle position of the support member in a length direction of the support frame (110).

9. The warehousing shelving unit according to claim 7, wherein an end of the connecting member (135) facing away from the support member is fixedly connected to a surface of the support structure (121) facing the support member.

10. The warehousing shelving unit according to claim 7, wherein an end of the connecting member (135) facing away from the support structure (121) is fixedly connected to an upper surface of the support member, so as to hoist the support member on the support structure (121).

11. The warehousing shelving unit according to claim 2, wherein in a width direction of the support frame (110), each support member has a first side surface (136) and a second side surface (137) opposite to each other, and at least one of the first side surface (136) and the second side surface (137) forms a groove (1313).

12. The warehousing shelving unit according to claim 11, wherein a plurality of grooves (1313) are formed, and the plurality of grooves (1313) are arranged on the support member at intervals.

13. The warehousing shelving unit according to claim 12, wherein a depth of the groove (1313) is in a range of 1/3 to 1/2 of a width of the support member.

14. The warehousing shelving unit according to claim 2, wherein each support member comprises two support blocks arranged at intervals, each of the support blocks is connected to a support structure (121) located above the support block through a connecting member (135), and a third opening (138) is formed between adjacent support blocks.

15. A method for controlling a robot, applicable to a warehousing system, wherein the warehousing system comprises at least one warehousing shelving unit according to any of claims 1 to 14, and the method comprises:
determining a target temporary storage location;
controlling a first robot to take out goods from the target temporary storage location and then move away from the target temporary storage location through a first opening or a second opening when the first robot currently performs a task of taking goods; or
controlling the first robot to reach the target temporary storage location through the first opening or the second opening to perform a task of placing goods when the first robot currently performs the task of placing goods.

16. The method according to claim 15, wherein when the first robot currently performs the task of taking goods, the method further comprises:
controlling the first robot to reach the target temporary storage location through the second opening or the first opening.

17. The method according to claim 15, wherein after controlling the first robot to reach the target temporary storage location through the first opening or the second opening to perform the task of placing goods when the first robot currently performs the task of placing goods, the method further comprises:
controlling the first robot to perform the task of placing goods and then move away from the target temporary storage location through the first opening or the second opening if the first robot reaches the target temporary storage location through the first opening; or
controlling the first robot to perform the task of placing goods and then move away from the target temporary storage location through the first opening or the second opening if the first robot reaches the target temporary storage location through the second opening.

18. The method according to any of claims 15 to 17, further comprising:
controlling the first robot to walk based on one of the following driving routes when the first robot is in a loaded state or an unloaded state:
a: reaching the target temporary storage location though a second robot channel on a first side;
b: reaching the target temporary storage location though a second robot channel on a second side;
c: leaving the target temporary storage location, and then reaching a target location through the second robot channel on the first side; and
d: leaving the target temporary storage location, and then reaching the target location through the second robot channel on the second side;
wherein the second robot channel is located between the warehousing shelving units or between the warehousing shelving unit and a public area, and the first side and the second side are located on two sides of the warehousing shelving unit respectively.

19. The method according to claim 18, wherein when the warehousing system comprises the second channel, if the first robot is in a loaded state or an unloaded state, the driving route further comprises:
e: reaching the target temporary storage location through the second channel; and
f: leaving the target temporary storage location, and then reaching the target location through the second channel.

20. The method according to claim 18, wherein when the warehousing system comprises the third channel, if the first robot is in a loaded state, the driving route further comprises:
g: reaching the target temporary storage location through the third channel; and
h: leaving the target temporary storage location, and then reaching the target location through the third channel.

21. The method according to claim 18, wherein when the warehousing system comprises the first channel, first channels of a plurality of warehousing shelving units are arranged correspondingly, the first channels corresponding to the plurality of warehousing shelving units form a connected channel, and
the driving route further comprises:
i: reaching the target temporary storage location through the first channel of an adjacent warehousing shelving unit and a second robot channel of the warehousing shelving unit where the target temporary storage location is located; and
j: leaving the target temporary storage location, and then reaching the target location through the first channel of a current warehousing shelving unit, the second robot channel of the current warehousing shelving unit, and the first channel of the adjacent warehousing shelving unit.

22. A management terminal, comprising:
a processor and a memory communicatively connected to the processor, wherein
the memory stores computer program instructions, and the computer program instructions, when invoked by the processor, cause the processor to perform the robot control method according to any of claims 15 to 21.

23. A warehousing system, comprising: the plurality of warehousing shelving units according to any of claims 1 to 14.

24. The warehousing system according to claim 23, further comprising:
a second robot channel located between adjacent warehousing shelving units or between the warehousing shelving unit and a public area;
wherein the second robot channel is configured for a first robot and a second robot to pass through, and the second robot is configured to transport goods between a storage location and a temporary storage location.

25. The warehousing system according to claim 23 or 24, wherein when the warehousing shelving units comprise first channels, the first channels of the plurality of warehousing shelving units are arranged correspondingly, and the first channels corresponding to the plurality of warehousing shelving units form a connected channel.

26. The warehousing system according to claim 23, further comprising: the management terminal according to claim 22.
